(19) Europäisches Patentamt / European Patent Office / Office européen des brevets

(11) **EP 4 318 650 B1**

(12) **EUROPEAN PATENT SPECIFICATION**

(45) Date of publication and mention of the grant of the patent:
**14.01.2026  Bulletin 2026/03**

(21) Application number: **22853501.9**

(22) Date of filing: **04.08.2022**

(51) International Patent Classification (IPC):
*B22F 3/00* (2021.01)  *B22F 3/18* (2006.01)
*B29C 43/24* (2006.01)  *B30B 3/04* (2006.01)
*B30B 15/30* (2006.01)  *H01G 11/50* (2013.01)
*H01G 11/86* (2013.01)  *H01G 13/00* (2013.01)
*H01M 4/04* (2006.01)  *H01M 4/13* (2010.01)
*H01M 4/139* (2010.01)  *H01M 4/62* (2006.01)
*H01M 10/052* (2010.01)  *H01M 10/0525* (2010.01)
*B29L 31/34* (2006.01)  *H01G 11/38* (2013.01)

(52) Cooperative Patent Classification (CPC):
H01G 11/86; B22F 3/003; B22F 3/18; B29C 43/24;
B30B 3/04; B30B 15/308; H01G 11/50;
H01G 13/00; H01M 4/04; H01M 4/0404;
H01M 4/0435; H01M 4/13; H01M 4/139;
H01M 4/62; H01M 4/622;          (Cont.)

(86) International application number:
**PCT/KR2022/011590**

(87) International publication number:
**WO 2023/014126 (09.02.2023 Gazette 2023/06)**

(54) **MANUFACTURING METHOD FOR DRY ELECTRODE FILM**

HERSTELLUNGSVERFAHREN FÜR TROCKENE ELEKTRODENFOLIE

PROCÉDÉ DE FABRICATION DE FILM D'ÉLECTRODE SÈCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **06.08.2021  KR 20210104170**

(43) Date of publication of application:
**07.02.2024  Bulletin 2024/06**

(73) Proprietor: **LG Energy Solution, Ltd.**
**Seoul 07335 (KR)**

(72) Inventors:
• **SHIN, Dong-Mok**
**Daejeon 34122 (KR)**
• **YOON, Kyung-Hwan**
**Daejeon 34122 (KR)**
• **CHUNG, Koo-Seung**
**Daejeon 34122 (KR)**
• **LEE, Nam-Jeong**
**Daejeon 34122 (KR)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
EP-A1- 4 207 338      CN-A- 102 629 681
DE-A1- 1 804 743      JP-A- 2007 026 984
KR-A- 20200 138 263   KR-A- 20210 006 899
US-A1- 2007 143 989   US-A1- 2015 255 779
US-A1- 2015 303 481   US-B1- 7 572 551

(52) Cooperative Patent Classification (CPC): (Cont.)
**H01M 4/623; H01M 10/052; H01M 10/0525;**
B29L 2031/3468; H01G 11/38; Y02E 60/10

**Description**

TECHNICAL FIELD

The present invention relates to a method for manufacturing a dry electrode film that can be used as an electrode for an electrochemical device.

The present application claims priority to Korean Patent Application No. 10-2021-0104170 filed on August 6, 2021 in the Republic of Korea.

BACKGROUND ART

Due to a rapid increase in use of fossil fuel, there has been an increasing need for use of substitute energy and clean energy. The most actively studied field as a part of attempts to meet such a need is the field of power generation and power storage using electrochemistry. Currently, typical examples of electrochemical devices using electrochemical energy include secondary batteries, and application thereof has been extended gradually. A lithium secondary battery as a representative of such secondary batteries has been used not only as an energy source of mobile instruments but also as a power source of electric vehicles and hybrid electric vehicles capable of substituting for vehicles, such as gasoline vehicles and diesel vehicles, using fossil fuel and regarded as one of the main causes of air pollution, recently. In addition, application of such a lithium secondary battery has been extended even to a supplementary power source of electric power through the formation into a grid. A process of manufacturing such a lithium secondary battery is broadly divided into an electrode-forming step, an electrode assembly-forming step and an aging step. The electrode-forming step is further divided into an electrode mixture-mixing step, an electrode coating step, a drying step, a pressing step, a slitting step, a winding step, or the like. Among the steps, the electrode mixture-mixing step is a step of mixing the ingredients for forming an electrode active layer configured to carry out electrochemical reactions actually in the electrode. Particularly, an electrode active material as an essential element of the electrode is mixed with a binder used for the binding of powder particles among themselves and the adhesion to a current collector, a solvent for imparting viscosity and dispersing powder, or the like, to prepare a slurry having flowability.

Such a composition mixed for forming an electrode active layer is also called an electrode mixture in a broad sense. After carrying out the above-mentioned steps, an electrode coating step of applying the electrode mixture onto a current collector having electrical conductivity and a drying step of removing the solvent contained in the electrode mixture are carried out, and then the resultant electrode is pressed to a predetermined thickness.

Meanwhile, as the solvent contained in the electrode mixture evaporates during the drying step, defects, such as pinholes or cracks, may be generated in the preliminarily formed electrode active layer. In addition, the active layer is not dried uniformly at the internal part and external part thereof, and thus a powder floating phenomenon may occur due to a difference in solvent evaporation rate. In other words, a powder present in a portion dried earlier may float, while forming a gap from a portion dried relatively later, resulting in degradation of electrode quality.

Therefore, to solve the above-mentioned problems, there has been considered a drying apparatus which allows uniform drying of the internal and external parts of an active layer and can control the evaporation rate of a solvent. However, such drying apparatuses are expensive and require a lot of costs and times for their operation, and thus are disadvantageous in terms of manufacture processability. Therefore, recently, active studies have been conducted to manufacture a dry electrode without using any solvent.

In general, the dry electrode is obtained by laminating a free-standing film, including an active material, a binder and a conductive material and prepared in the form of a film, onto a current collector. First, an active material, a carbonaceous material as a conductive material and a binder capable of fibrilization are mixed by using a blender, the binder is fibrilized by imparting shear force thereto through a process, such as jet milling or kneading, and then the resultant mixture is subjected to calendering to form a film shape, thereby providing a free-standing film.

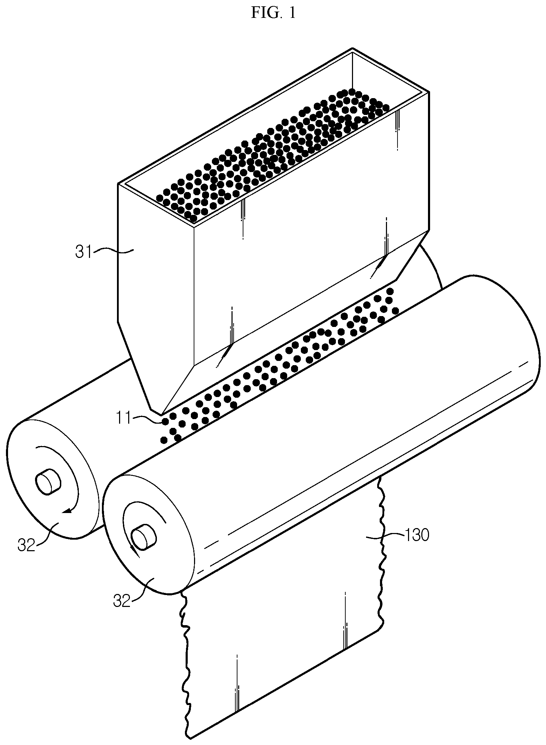

However, when manufacturing a dry electrode film by applying a calendering process to such a dry mixture, the edges of both ends of the dry electrode film in the cross-machine direction are not uniform and show an irregular sawtooth-like shape, and thus the dry electrode film shows an irregular dimension of width, and cracking may occur easily from the gap between the teeth. FIG. 1 is a schematic view illustrating the method for manufacturing a dry electrode film according to the related art. Referring to FIG. 1, an electrode mixture powder 11 is compressed into a sheet-like shape through a calender roller to provide a dry electrode film 130. When winding or dewinding such a dry electrode film, the cracking becomes severe, even resulting in the rupture of the dry electrode film. When applying such a dry electrode film to the manufacture of a battery, the battery may undergo significant degradation of electrochemical properties. Meanwhile, even when the sawtooth portion is cut to provide the dry electrode film with a uniform boundary, the width of the dry electrode film may not be constant from one manufacture batch to another manufacture batch due to a non-uniform depth of sawtooth gullet. In addition, even in the dry electrode film obtained from a single manufacture batch, the remaining portion based on the minimum value of available width is cut, and thus there is a significant loss of the electrode material.

Therefore, there is an imminent need for developing a technology for manufacturing a dry electrode which can solve the above-mentioned problems.

US 7,572,551 B1 discloses a method for manufacturing electrode active tapes, including blanks/plates by forming an electrode active mixture; adjusting the solids content to form a filter cake mix; crumbling the filter cake into particles and performing at least one calendering step at a calendering station having a nip zone while applying a force to the particles axially with the direction of movement of the particles to compact the particles in the nip zone for more even presentation during calendering.

CN 102 629 681 A discloses a powder-based electrode forming method, which comprises the following steps of: uniformly mixing a powder active substance, a powder conductive agent and a powder adhesive through a three-dimensional powder mixer or a zero-gravity powder mixer; crushing through a low-temperature crusher; performing fibrous extrusion forming through a double-screw extruder or an internal mixer/open mill and then achieving target thickness through hot pressing of a calender; and finally performing three-layer compounding with a current collector of a printing conductive adhesive to form an electrode and performing cold rolling to improve the compaction density.

US 2007/143989 A1 an apparatus and method for fabricating continuous cathode collectors for use in lithium/thionyl chloride and lithium/sulfuryl chloride cells.

DE 18 04 743 A1 discloses a feed hopper extending over the length of the roll clearance and has, in the central area of the metal particles' direction of fall, inserts which offer the metal particles increased frictional resistance which is used for manufacture of sheet and strip metal.

EP 4 207 338 A1 discloses a method for manufacturing a dry electrode for energy storage device, which can form a uniform insulating film on the edge part of the dry electrode INVENTION

Technical Problem

The present invention is designed to solve the problems of the related art, and therefore the present invention is directed to providing a method for manufacturing a dry electrode film having a uniform and regular edge.

Technical Solution

According to the first embodiment of the present invention, there is provided a method for manufacturing a dry electrode film for an electrochemical device, including the steps of:

(S10) preparing an electrode mixture powder for manufacturing a dry electrode film and a powdery polymer resin;
(S20) introducing the powdery polymer resin to at least one end of the electrode mixture powder in the cross-machine direction, and compressing the electrode mixture powder and the powdery polymer resin to be processed into a sheet-like electrode film member having a predetermined thickness; and
(S30) removing an edge part having a predetermined width from the end of the electrode film member in the cross-machine direction,
wherein the electrode film member has an electrode mixture portion having a predetermined width, and a protective portion connected to the end through which the powdery polymer resin is introduced in the cross-machine direction of the electrode mixture portion and having a predetermined width; and the protective portion is included in the edge part of the electrode film member and removed when carrying out step (S30);
wherein introducing (S20) is carried out by a calendering process, and the powdery polymer resin is introduced to both ends of an input stream of the electrode mixture powder during the calendering process.

According to the second embodiment of the present invention, there is provided the method for manufacturing a dry electrode film for an electrochemical device as defined in the first embodiment, wherein the electrode mixture powder includes an electrode active material, a conductive material and a binder resin, and the binder resin is treated by a microfibrilization process.

According to the third embodiment of the present invention, there is provided the method for manufacturing a dry electrode film for an electrochemical device as defined in the first or second embodiment, wherein the calendering process is carried out by using a pair of calendering rollers, and the input stream of the powdery polymer resin and the input stream of the electrode mixture powder are divided by a guide dam disposed in front of the calendering rollers.

According to the fourth embodiment of the present invention, there is provided the method for manufacturing a dry electrode film for an electrochemical device as defined in any one of the first to the third embodiments, wherein the powdery polymer resin is treated by a microfibrilization process.

According to the fifth embodiment of the present invention, there is provided the method for manufacturing a dry electrode film for an electrochemical device as defined in any one of the first to the fourth embodiments, wherein the powdery polymer resin includes an elastomeric polymer, and the elastomeric polymer is used in an amount of 40 wt% or less based on 100 wt% of the powdery polymer resin.

According to the sixth embodiment of the present invention, there is provided the method for manufacturing a dry electrode film for an electrochemical device as defined in the fifth embodiment, wherein the elastomeric polymer includes at least one selected from styrene-butadiene rubber (SBR), butadiene rubber (BR), nitrile-butadiene rubber, fluoro-rubber, such as Viton rubber, chloroprene rubber (CR), ethylene-propylene rubber (EPM) and silicone rubber.

According to the seventh embodiment of the present invention, there is provided the method for manufacturing a dry electrode film for an electrochemical device as defined in any one of the first to the sixth embodiments, wherein the powdery polymer resin includes the same ingredient as the binder resin contained in the electrode mixture powder.

According to the eighth embodiment of the present invention, there is provided the method for manufacturing a dry electrode film for an electrochemical device as defined in the seventh embodiment, wherein the powdery polymer resin is treated by a microfibrilization process.

According to the ninth embodiment of the present invention, there is provided the method for manufacturing a dry electrode film for an electrochemical device as defined in any one of the first to the eighth embodiments, wherein the powdery polymer resin includes polytetrafluoroethylene (PTFE).

According to the tenth embodiment of the present invention, there is provided the method for manufacturing a dry electrode film for an electrochemical device as defined in the ninth embodiment, wherein the powdery polymer resin further includes an elastomeric polymer.

According to the eleventh embodiment of the present invention, there is provided the method for manufacturing a dry electrode film for an electrochemical device as defined in any one of the first to the tenth embodiments, wherein the dry electrode powder is obtained by the method including the steps of: (a) preparing a powdery mixture including an electrode active material, a conductive material and a binder resin; (b) kneading the powdery mixture at 70-200°C to prepare mixture lumps; and (c) pulverizing the mixture lumps to obtain an electrode powder.

According to the twelfth embodiment of the present invention, there is provided the method for manufacturing a dry electrode film for an electrochemical device as defined in the eleventh embodiment, wherein step (b) is carried out under a pressure condition equal to or higher than ambient pressure.

According to the thirteenth embodiment of the present invention, there is provided the method for manufacturing a dry electrode film for an electrochemical device as defined in any one of the first to the twelfth embodiments, wherein the powdery polymer resin is introduced to both end portions of the electrode mixture powder in the cross-machine direction, in step (S20), the edge part having a predetermined width is removed from the end portions of the electrode film member in the cross-machine direction, in step (S30), and the protective portion is connected to each of the end portions of the electrode mixture portion in the cross-machine direction.

Further described herein and not covered by the claims is an electrode for an electrochemical device including a current collector and a dry electrode film disposed on one surface or both surfaces of the current collector, wherein the dry electrode film is obtained by the method as defined in the first embodiment.

Further described herein and not covered by the claims is a secondary battery including the dry electrode as described herein, wherein the dry electrode is a positive electrode, and an electrode assembly including the positive electrode, a negative electrode and a separator is received in a battery case together with a lithium-containing non-aqueous electrolyte.

Further described herein and not covered by the claims is an energy storage system including the secondary battery as described herein as a unit cell.

Further described herein and not covered by the claims is a system for manufacturing a dry electrode film, including: a blender configured to mix ingredients of an electrode mixture including an active material, a conductive material and a binder; a kneader configured to knead the electrode mixture to form mixture lumps in order to fibrilize the binder; a pulverizer configured to pulverize the mixture lumps to form an electrode mixture powder; and a calender device configured to form an electrode film member from the electrode mixture powder and a polymer resin powder introduced thereto.

The system for manufacturing a dry electrode film as described herein, wherein the calender device further includes an ingredient-supplying unit, the electrode mixture powder and the polymer resin powder are introduced through the ingredient-supplying unit, and the ingredient-supplying unit further includes a partition member configured to differentiate the introduction path of the electrode mixture powder from that of the polymer resin powder.

Further described herein and not covered by the claims is an electrode film member for an electrochemical device, including: an electrode mixture powder for manufacturing a dry electrode film; and an edge part compressed into a sheet-like shape having a predetermined thickness through the compression of a powdery polymer resin at the end of the electrode mixture powder.

Advantageous Effects

The dry electrode film obtained by the method according to the present invention has a uniform and regular edge, and thus the dry electrode film can be controlled regularly to have a predetermined width. In addition, when using a roll-to-roll continuous process to manufacture a dry electrode film, it is possible to control the width of the dry electrode film uniformly during the manufacture. Further, since it is easy to control the width of the dry electrode film, it is possible to minimize a difference in dry electrode film width between one manufacture batch and another manufacture batch, even when the dry electrode film is manufactured through different manufacture batches.

Additionally, since the dry electrode film has a uniform and regular edge boundary, it is significantly less likely that the dry electrode film is damaged due to cracking or the like, and the dry electrode film can be handled with ease.

DESCRIPTION OF DRAWINGS

FIG. 1 is a schematic view illustrating the method for manufacturing a dry electrode film according to the related art and the edge boundary shape of the dry electrode film obtained thereby.

FIG. 2 shows a photographic image of the dry electrode film obtained according to Comparative Example 1.

FIGS. 3a and 3b are schematic views illustrating the method for manufacturing a dry electrode film according to the present invention and the edge boundary shape of the dry electrode film obtained thereby.

FIG. 4 shows a photographic image of the dry electrode film obtained according to Example 1.

FIG. 5 shows a portion cut from the sample obtained from Example, when evaluating the mechanical properties.

FIG. 6 shows a portion cut from the sample obtained from Comparative Example, when evaluating the mechanical properties.

FIG. 7 shows a portion cut from the sample obtained from Reference Example, when evaluating the mechanical properties.

Detailed Embodiment

Hereinafter, preferred embodiments of the present invention will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

The terminology used herein is for the purpose of describing particular embodiments only and is not intended to be limiting of the present disclosure. As used herein, the singular forms 'a', 'an' and 'the' are intended to include the plural forms as well, unless the context clearly indicates otherwise.

It will be further understood that the terms 'comprises' and/or 'comprising', or 'includes' and/or 'including' when used in this specification, do not preclude the presence of other elements but specify the additional presence of other elements, unless otherwise stated.

The present invention relates to a method for manufacturing a free standing-type dry electrode film and a system for manufacturing the free standing-type dry electrode film. As described hereinafter, the dry electrode film is obtained through a dry manufacturing process. As used herein, the term 'free standing-type' means that the dry electrode film can retain its shape with no dependence on another member and can be handled by itself.

Meanwhile, the dry electrode film may be applied to an electrode for an electrochemical device. For example, the electrochemical device may include a primary battery, a dual layer capacitor, a super capacitor, a fuel cell, a secondary battery, or the like. More particularly, the secondary battery may include a lithium-ion secondary battery.

In one aspect of the present invention, there is provided a method for manufacturing a dry electrode film.

The method for manufacturing a dry electrode film according to an embodiment of the present invention includes the steps of:

(S10) preparing an electrode mixture powder for manufacturing a dry electrode film and a powdery polymer resin;
(S20) introducing the polymer resin to at least one end of the electrode mixture powder in the cross-machine direction, and compressing the electrode mixture powder and the polymer resin to be processed into a sheet-like electrode film member having a predetermined thickness; and
(S30) removing an edge part having a predetermined width from the end of the electrode film member in the cross-machine direction,
wherein the electrode film member has an electrode mixture portion having a predetermined width, and a protective portion connected to the end through which the polymer resin is introduced in the cross-machine direction of the electrode mixture portion and having a predetermined width; and the protective portion is included in the edge part of the electrode film member and removed when carrying out step (S30);

wherein introducing (S20) is carried out by a calendering process, and the powdery polymer resin is introduced to both ends of an input stream of the electrode mixture powder during the calendering process.

Each step will be explained in more detail hereinafter.

First, prepared are an electrode mixture powder for manufacturing a dry electrode film and a powdery polymer resin (S10). Each of the electrode mixture and polymer resin is provided independently as powder which is an assembly of a plurality of microparticles.

The electrode mixture powder includes microparticles, which include any one selected from an electrode active material, a conductive material and a binder, or a mixture of two or more of them. According to an embodiment of the present disclosure, the electrode mixture powder includes an electrode active material and a binder. The microparticles may have a particle diameter of 10-2,000 $\mu$m. When the microparticles satisfy the above-defined range of particle diameter, it is possible to form a film having a uniform thickness and density and to ensure excellent physical properties. When the particle diameter is less than 10 $\mu$m, the microparticles cause contamination of the roller during the calendering process, or cannot be interconnected well by the binder fibrils and are separated and difficult to participate in film formation, and cause degradation of mechanical strength, or the like, thereby adversely affecting the physical properties of the resultant dry electrode film. Meanwhile, when the particle diameter is larger than 2,000 $\mu$m, it is difficult to ensure the thickness uniformity of the dry electrode film.

According to an embodiment of the present disclosure, the electrode mixture powder may be prepared by the following method.

First, a mixture including an active material, a conductive material and a binder is prepared. Herein, the mixing for preparing the mixture is carried out in order to obtain a homogeneous mixture of the active material, the conductive material and the binder resin. Since the ingredients are mixed in a powder state, the mixing method is not particularly limited but various methods may be used, as long as the method allows homogeneous mixing of the ingredients. However, since the present invention is directed to providing a dry electrode using no solvent, the mixing may be carried out by a dry mixing process. For example, the mixing may be carried out by introducing the ingredients to an instrument, such as a mixer or a blender.

In addition, the mixing may be carried out in a mixer at 5,000-20,000 rpm for 30 seconds to 2 minutes, specifically at 10,000-15,000 rpm for 30 seconds to 1 minute in order to ensure the uniformity of the resultant electrode mixture powder.

According to the present disclosure, the binder resin is not particularly limited, as long as it can be fibrilized by the step of preparing the mixture and/or the fibrilization step as described hereinafter. The fibrilization of the binder resin may be performed partially in the step of preparing the mixture, and microfibrilization of the binder resin may be performed in the fibrilization step as described hereinafter. The fibrilization refers to treatment of finely dividing a polymer, and for example, may be carried out by using mechanical shear force, or the like. The fibrilized polymer fibers generate a lot of microfibers (fibrils) through the surface disintegration. Non-limiting examples of the binder resin may include polytetrafluoroethylene (PTFE), polyolefin, or a mixture of two or more of them. Particularly, the binder resin may include polytetrafluoroethylene (PTFE), and more particularly, it may be polytetrafluoroethylene (PTFE). Particularly, the polytetrafluoroethylene (PTFE) may be used in an amount of 60 wt% or more based on the total weight of the binder resin. Meanwhile, the binder resin may further include at least one selected from polyethylene oxide (PEO), polyvinylidene fluoride (PVDF), polyvinylidene fluoride-co-hexafluoropropylene (PVDF-HFP) and polyolefin-based binder resin.

The dry electrode may be a positive electrode, and the active material may be a positive electrode active material.

The positive electrode active material may include any one selected from lithium transition metal oxides, lithium metal iron phosphorus oxides and metal oxides, and is not particularly limited. Particular examples of the positive electrode active material include at least one selected from: layered compounds, such as lithium cobalt oxide ($LiCoO_2$) and lithium nickel oxide ($LiNiO_2$), or those compounds substituted with one or more transition metals; lithium manganese oxides such as those represented by the chemical formula of $Li_{1+x}Mn_{2-x}O_4$ (wherein x is 0-0.33), $LiMnO_3$, $LiMn_2O_3$ and $LiMnO_2$; lithium copper oxide ($Li_2CuO_2$); vanadium oxides such as $LiV_3O_8$, $LiV_3O_4$, $V_2O_5$ or $Cu_2V_2O_7$; Ni-site type lithium nickel oxides represented by the chemical formula of $LiNi_{1-x}M_xO_2$ (wherein M is Co, Mn, Al, Cu, Fe, Mg, B or Ga, and x is 0.01-0.3); lithium manganese composite oxides represented by the chemical formula of $LiMn_{2-x}M_xO_2$ (wherein M is Co, Ni, Fe, Cr, Zn or Ta, and x is 0.01-0.1) or $Li_2Mn_3MO_8$ (wherein M is Fe, Co, Ni, Cu or Zn); $LiMn_2O_4$ in which Li is partially substituted with an alkaline earth metal ion; lithium metal phosphorous oxides $LiMPO_4$ (wherein M is Fe, Co, Ni or Mn); disulfide compounds; and $Fe_2(MoO_4)_3$; or the like. However, the scope of the present disclosure is not limited thereto.

In a variant, the dry electrode may be a negative electrode, and the active material may be a negative electrode active material. Particular examples of the negative electrode active material include: carbon such as non-graphitizable carbon or graphite-based carbon; metal composite oxides, such as $Li_xFe_2O_3$ ($0 \leq x \leq 1$), $Li_xWO_2$ ($0 \leq x \leq 1$) and $Sn_xMe_{1-x}Me'_yO_z$ (Me: Mn, Fe, Pb, Ge; Me': Al, B, P, Si, elements of Group 1, 2 or 3 in the Periodic Table, halogen; $0 < x \leq 1$; $1 \leq y \leq 3$; $1 \leq z \leq 8$); lithium metal; lithium alloy; silicon-based alloy; tin-based alloy; silicon oxides, such as SiO, SiO/C and $SiO_2$; metal oxides, such as SnO, $SnO_2$, PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$ and $Bi_2O_5$; conductive polymers, such as polyacetylene; Li-Co-Ni type materials; or the like.

More particularly, the dry electrode may be a positive electrode. Therefore, the active material may be a positive electrode active material, and particular examples thereof include lithium transition metal oxides, lithium nickel-manganese-cobalt oxides, lithium nickel-manganese-cobalt oxide partially substituted with other transition metals, lithium iron phosphorus oxides, or the like.

The conductive material is not particularly limited, as long as it has conductivity while not causing any chemical change in the corresponding battery. Particular examples of the conductive material include: graphite, such as natural graphite or artificial graphite; carbon black, such as acetylene black, ketjen black, channel black, furnace black, lamp black or thermal black; conductive fibers, such as carbon fibers or metal fibers; fluorocarbon; metal powder, such as, aluminum or nickel powder; conductive whisker, such as zinc oxide or potassium titanate; conductive metal oxide, such as titanium dioxide; conductive polymer such as a polyphenylene derivative; or the like. Particularly, the conductive material may include at least one selected from the group consisting of activated carbon, graphite, carbon black and carbon nanotubes, and more particularly, activated carbon, with a view to homogeneous mixing of the conductive material and improvement of conductivity.

The mixing ratio of the active material, the conductive material and the binder may be 80-98 wt% : 0.5-10 wt% : 0.5-10 wt% (active material : conductive material : binder), particularly, 85-98 wt% : 0.5-5 wt% : 0.5-10 wt%.

When the binder content is excessively high beyond the above-defined range, the binder may be fibrilized excessively during the subsequent step, thereby adversely affecting the overall process. When the binder content is excessively low, it is not possible to carry out sufficient fibrilization, and thus the ingredients cannot be aggregated to such a degree that the ingredients form mixture lumps, the dry electrode film is manufactured hardly, or the physical properties of the dry electrode film is degraded undesirably.

In addition, when the content of the conductive material is excessively high beyond the above-defined range, the content of the active material is reduced relatively, resulting in a decrease in capacity. When the content of the conductive material is excessively low, sufficient conductivity cannot be ensured, or the physical properties of the dry electrode film is degraded undesirably.

Meanwhile, a filler as an ingredient for inhibiting electrode swelling may be further introduced optionally to the mixture. The filler is not particularly limited, as long as it is a fibrous material, while not causing any chemical change in the corresponding battery. Particular examples of the filler include: olefinic polymers, such as polyethylene or polypropylene; fibrous materials, such as glass fibers or carbon fibers; or the like.

Next, the mixture obtained as described above is subjected to a fibrilization step to fibrilize the binder resin. High-shear mixing, such as jet-mill mixing, may be applied as the fibrilization step.

In addition, according to an embodiment of the present disclosure, low-shear kneading may be used as the fibrilization process. For example, the fibrilization step may be carried out through a reactor, such as a kneader.

The binder is fibrilized by the high-shear mixing or kneading step, and the active material and conductive material powder particles are bound or interconnected by the fibrilzied binder, and thus mixture lumps having a solid content of 100% may be formed.

When the binder fibrilization step is carried out through kneading, the kneading may be carried out at a rate controlled to 10-100 rpm. For example, the kneading may be carried out at a rate controlled to 40-70 rpm, within the above-defined range. The kneading may be carried out for 1-30 minutes. For example, the kneading may be carried out at a rate of 40-70 rpm for 3-7 minutes, within the above-defined ranges. Meanwhile, the kneading may be carried out at a shear rate controlled to 10/s to 500/s. According to an embodiment of the present disclosure, the kneading may be carried out for 1-30 minutes, and the shear rate may be controlled to a range of 30/s to 100/s.

In addition, the kneading step may be carried out at high temperature under a pressure condition equal to or higher than ambient pressure, particularly, pressure condition higher than ambient pressure.

More particularly, the kneading may be carried out at 50-230°C, specifically 90-200°C.

When the kneading is carried out at a low temperature beyond the above-defined temperature range, it is not possible to perform the fibrilization of the binder during the kneading and lump formation through kneading sufficiently. As a result, it is not possible to form a film with ease during calendering. On the other hand, when the kneading is carried out at an excessively high temperature, the binder may be fibrilized rapidly, and the resultant fibers may be cut by excessive shear force, undesirably.

In addition, the kneading may be carried out under a pressure equal to or higher than ambient pressure, particularly 1-3 atm, and more particularly 1.1-3 atm. When the kneading is carried out under an excessively high pressure beyond the above-defined pressure range, there are problems in that the resultant fibers may be cut due to the application of excessive shear force and pressure and the mixture lumps may have excessively increased density, undesirably. In other words, according to the present disclosure, it is possible to accomplish desired effects, when a low-shear mixing step is carried out at high temperature under a pressure condition equal to or higher than ambient pressure, instead of high-shear mixing.

Then, the lump-like mixture obtained from the kneading step is pulverized to obtain a powdery electrode mixture.

Particularly, the lump-like mixture prepared through the kneading may be directly subjected to calendering.

However, in this case, it is required to press the mixture lumps under strong pressure at high temperature to convert them into a thin film. As a result, there are problems in that the film may have excessively high density, or a uniform film cannot be obtained. Therefore, according to the present disclosure, the mixture lumps are subjected to a pulverization step to obtain a powdery electrode mixture.

Herein, the pulverization step may be carried out by using a known pulverizing instrument, such as a blender or a grinder, but is not limited thereto. Particularly, the pulverization step may be carried out at a rate of 5,000-20,000 rpm for 30 seconds to 10 minutes, more particularly, at a rate of 10,000-18,000 rpm for 30 seconds to 1 minute.

When the pulverization is carried out at an excessively low rpm or for an excessively short time beyond the above-defined ranges, it is not possible to carry out pulverization sufficiently, resulting in the problem of generation of a powder having a size inadequate to form a film. When the pulverization is carried out at an excessively high rpm or for an excessively long time, a lot of fine powder may be generated from the mixture lumps undesirably.

Meanwhile, when the binder fibrilization is carried out by a mixing process, any separate pulverization step may not be carried out.

In the electrode mixture powder obtained by the above-described method, the binder resin is totally or partially fibrilized by mechanical shear force, or the like, and thus may be micronized and divided. Particularly, on the binder resin surface, fibrilized portions are disintegrated to generate a plurality of microfibers (fibrils). Therefore, in the microparticles obtained by the above-described method, the binder resin and the electrode active material particles are bound to one another, and such biding may be further reinforced by the fibrils of the binder resin.

Meanwhile, the polymer resin contained in the protective portion may be any resin and is not particularly limited, as long as it can be used for a dry electrode film. According to an embodiment of the present disclosure, the polymer resin may include at least one selected from fluorinated resin, polyolefin-based resin and polyethylene oxide. The fluorinated resin may include at least one selected from polytetrfluoroethylene (PTFE), polyvinylidene fluoride (PVDF) and polyvinylidene fluoride-co-hexafluoropropylene (PVDF-HFP). The polyolefin-based resin may include at least one selected from polyethylene, polypropylene and polybutylene.

In addition, according to an embodiment of the present disclosure, the polymer resin may further include an elastomeric polymer. The elastomeric polymer may include at least one selected from styrene-butadiene rubber (SBR), butadiene rubber (BR), nitrile-butadiene rubber, fluoro-rubber, such as Viton rubber, chloroprene rubber (CR), ethylene-propylene rubber (EPM) and silicone rubber. When an excessively large amount of elastomeric polymer is contained in the protective portion, it is difficult to form a film. Considering this, the elastomeric polymer may not be used, or may be used in an amount of 40 wt% or less, based on 100 wt% of the polymer resin.

According to an embodiment of the present disclosure, the polymer resin may be treated by a microfibrilization process. The microfibrilization process may be carried out by the same high-shear mixing or low-shear kneading process as used in preparing the electrode mixture.

According to an embodiment of the present disclosure, the polymer resin preferably includes polytetrafluoroethylene (PTFE). More preferably, the polymer resin includes PTFE in an amount of 60 wt% or more based on 100 wt% of the polymer resin.

Meanwhile, according to an embodiment of the present disclosure, the polymer resin may include at least one ingredient which is the same as the binder resin contained in the electrode mixture. In this case, in the step of forming an electrode film member as described hereinafter, the electrode portion and the protective portion have a similar level of modulus upon the pressurization, and thus it is less likely that cracks or defects are generated between the electrode portion and the protective portion.

Then, the electrode mixture and the polymer resin prepared as described above are compressed to form an electrode film member. The electrode film member may be prepared in the form of a sheet having a predetermined thickness. The electrode film member is formed through a roll-to-roll continuous process and may have a strip-like shape having an aspect ratio of larger than 1. The electrode film member may have a thickness of 50-300 μm.

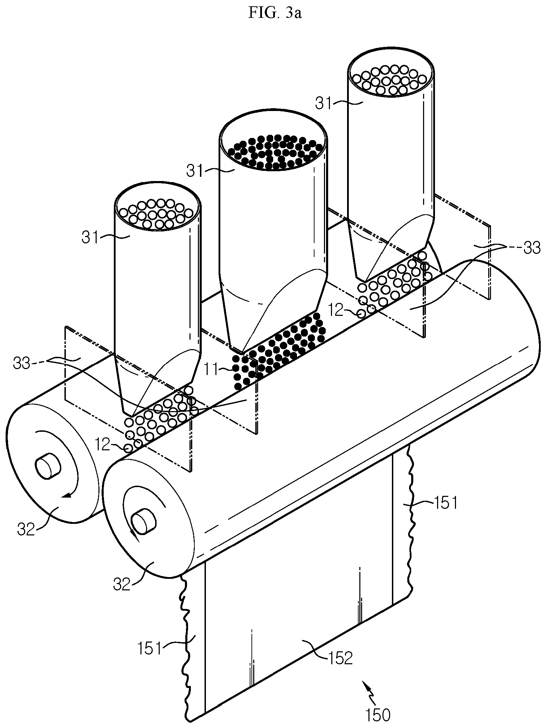

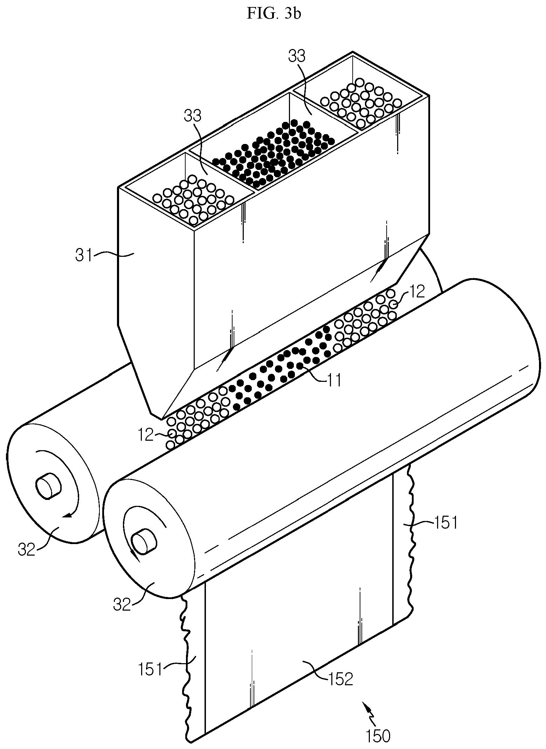

Step (S20) of forming an electrode film member is carried out through a calendering process which includes supplying the electrode mixture powder and the polymer resin powder to a calender device, and thermally compressing the supplied ingredients by using roll press(es) contained in the calender device. Herein, the electrode mixture powder and the polymer resin powder are supplied to the calender roll through a differentiated introduction path. The introduction path of the polymer resin powder is set at both ends around the introduction path of the electrode mixture powder. Herein, it is preferred that the ingredients are introduced in such a manner that the protective portion and the electrode mixture portion are linked in the resultant electrode film member so that they may not be separated from each other. For this purpose, differentiation of the introduction paths is performed preferably in the front stream of the calender device, and it is preferred that the ingredients introduced to the calender device have overlapped boundaries so that the protective portion and the electrode mixture portion may be linked to each other. The introduction paths may be differentiated by disposing a partition member for differentiating the introduction paths in the front stream of the calender roll. Referring to FIGS. 3a and 3b, a supplying unit 31 including a guide dam 33 or a partition member 34 ("33" in Fig.3b should be amended as "34") is provided as a partition member in the front of a calender roll 32, and the introduction path of the polymer resin 12 is differentiated from that of the electrode mixture powder 11 by the dam. However, when the ingredients are introduced to the calender roll after being passed through the guide dam, the boundaries may be overlapped, thereby providing an electrode film member 150 including an electrode mixture portion 152 and a protective portion 151 linked to each other.

As described above, the polymer resin powder is introduced to both ends outside of the introduction path (input stream) of the electrode mixture powder. In this manner, an electrode film member having a protective portion at both ends in the cross-machine direction of the electrode mixture portion may be obtained. The electrode mixture portion is a portion essentially including the calendered product of the electrode mixture powder, while the protective portion is a portion essentially including the calendered product of the polymer resin powder. The term 'essentially' refers to a content of the corresponding ingredient of 50 wt% or more. According to an embodiment of the present disclosure, the electrode mixture portion and the protective portion may be linked to each other through calendaring, and the boundary portion thereof may be unclear due to the intermixing of the polymer resin with the electrode mixture powder.

In this manner, the terminal boundary of the electrode mixture portion is formed uniformly and regularly by introducing the polymer resin powder together to both ends of the introduction path of the electrode mixture powder during the calendaring process of the electrode mixture powder. This is because the polymer resin compressed together with the electrode mixture portion at the end of the electrode mixture portion functions like a dam to prevent the end of the electrode mixture in the cross-machine direction from spreading irregularly by the compression. Since the electrode mixture portion has a uniform and regular boundary in the cross-machine direction, it is possible to minimize the amount of the electrode mixture portion removed in the subsequent step of removing the edge part. In addition, it is easy to control the width dimension of the electrode mixture portion by the protective portion.

In addition, since the protective portion having higher elasticity and impact absorption ratio as compared to the electrode mixture portion is disposed, the electrode is prevented from being damaged by external force, particularly from rupture or cracking. Even if an irregular sawtooth shape is generated at the boundary portion of the electrode mixture portion, the dents of the sawtooth are filled with the protective portion to fix the shape, and thus the frequency of cracking generation caused by the dents may also be reduced.

According to an embodiment of the present disclosure, the electrode mixture powder and the polymer resin may be supplied to the calender roller through an ingredient-supplying unit disposed in the front stream of the calender device. FIG. 3a is a schematic view illustrating that the ingredients are supplied to a calender roll through an ingredient-supplying unit 31 to obtain a dry electrode film. The ingredient-supplying unit may be provided with a container for receiving the ingredients, a supplying unit configured to supply the ingredients from the outside into the container, and an ejection portion through which the ingredients are supplied from the container to the calender device. Meanwhile, the container may be provided with a partition therein as a partition member 34 so that the electrode mixture powder and the polymer resin powder may not be intermixed but may be differentiated from each other. According to an embodiment of the present disclosure, the partition may be extended to the ejection portion, or may be disposed to the front of the ejection portion.

The calender device may be provided with a partition member 34 in the front stream as mentioned above, together with or instead of the ingredient-supplying unit, and thus the polymer resin and the electrode mixture may be differentiated from each other by the guide dam and supplied to the calender roller (FIG. 3b).

Once the ingredients are supplied to the calender roller, a sheet-like electrode film member is formed by hot compression. Herein, the roller may be controlled to a temperature of 50-200°C. Optionally, the calender device includes a roll pressing unit having two rollers facing each other, and a plurality of such roll pressing units may be disposed continuously. Herein, each roll pressing unit may be controlled suitably to a rotation speed ratio of the two rollers of 1:1-1:10 independently. For example, in at least one roll pressing unit, the rotation speed ratio of the two rollers may be controlled to 1:1-1:3. The calendaring process may be carried out once, twice or more until the electrode film member has a desired thickness.

Then, an edge part having a predetermined thickness is removed from one end or both ends in the cross-machine direction of the resultant electrode film member (S30). According to an embodiment of the present disclosure, the edge part includes the whole protective portion. If necessary, the edge part may include a part of the electrode mixture portion in order to remove the protective portion completely. According to another embodiment, the edge part may include a part of the protective portion. According to an embodiment of the present disclosure, the width of the edge part may be controlled to such a level that a strip-like dry electrode film including the electrode mixture powder may be obtained by removing the protective portion at least partially or totally. The protective portion is removed by removing the edge part, and thus a dry electrode film is obtained from the electrode film member. The resultant dry electrode film may have a strip-like shape having a regular width and an aspect ratio of larger than 1. In addition, after cutting and removing the edge part, the end of the dry electrode film shows low roughness and has a regular boundary. Meanwhile, according to the present disclosure, the method for removing the edge part is not limited to any particular method. For example, any conventional cutting means, such as a cutting device provided with a cutting blade made of a metal or diamond, or a laser etching device, may be used.

Meanwhile, the dry electrode film may have a porosity of 20-50%. Within the above-defined range, the porosity may be controlled to 40% or less, or 35% or less, preferably. When the porosity satisfies the above-defined range, there are provided various advantages. On the other hand, when the porosity is excessively low beyond the above-defined range, it is difficult to wet the dry electrode film with an electrolyte, which is not preferred in terms of life and output characteristics. When the porosity is excessively high, the volume of the dry electrode film required for realizing the same capacity is increased, which is not preferred in terms of energy density per unit volume.

The porosity may be calculated from the following Mathematical Formula 1 by using the actual density calculated based on the actual density and composition of each ingredient, after measuring the apparent density of the dry electrode film:

[Mathematical Formula 1]

$$\text{Porosity (\%)} = \{1- (\text{Apparent density/ Actual density})\} \times 100$$

Meanwhile, the method according to the present disclosure may further include a step of laminating the dry electrode film on one surface or both surfaces of the current collector and carrying out lamination to obtain an electrode. The lamination step may be a step of pressing and attaching the dry electrode film onto a current collector. The lamination may also be carried out through a roll pressing process using a lamination roller, wherein the lamination roller may be maintained at a temperature of 20-200°C.

Meanwhile, the current collector is not particularly limited, as long as it has high conductivity, while not causing any chemical change in the corresponding battery. Particular examples of the current collector include stainless steel, aluminum, nickel, titanium, baked carbon, copper or stainless steel surface-treated with carbon, nickel, titanium, silver, or the like. In addition, fine surface irregularities may be formed on the surface of the current collector to enhance the binding force with the positive electrode active material. The current collector may be used in various shapes, including a film, a sheet, a foil, a net, a porous body, a foamed body, a non-woven web, or the like.

Further, the current collector may be totally or partially coated with a conductive primer in order to reduce the surface resistance and to improve the adhesion. Herein, the conductive primer may include a conductive material and a binder. The conductive material is not particularly limited, as long as it has conductivity, and particular examples thereof include carbonaceous materials. The binder may include a fluorine-based binder (including PVDF and PVDF copolymers), which is soluble in a solvent, acrylic binder, aqueous binder, or the like.

Further described herein is a secondary battery including the dry electrode, wherein the dry electrode is a positive electrode, and an electrode assembly including the positive electrode, a negative electrode and a separator is received in a battery casing together with a lithium-containing non-aqueous electrolyte, and an energy storage system including the secondary battery as a unit cell.

Further described herein is a system for manufacturing a dry electrode film. The system includes: a blender configured to mix ingredients of an electrode mixture including an active material, a conductive material and a binder; a kneader configured to knead the electrode mixture of the ingredients to form mixture lumps; a pulverizer configured to pulverize the mixture lumps to form an electrode mixture powder; a calender device configured to form a dry electrode film from the electrode mixture powder; an eliminator configured to remove the edge part from the dry electrode film; and a lamination roll configured to dispose the dry electrode film on at least one surface of a current collector and to carry out lamination.

The blender is a mixer configured to mix the ingredients. As described above, the ingredients of the mixture may be mixed at a rate of 5,000-20,000 rpm. The kneader is a binder fibrilization device used instead of jet-milling and the mixture may be obtained in the form of mixture lumps through the kneading in the kneader. For this purpose, the kneader may be set to a temperature of 70-200°C and a pressure condition equal to or higher than ambient pressure.

The pulverizer is configured to pulverize the obtained mixture lumps to form a powder for an electrode, and may include a blender or a grinder.

Meanwhile, reference will be made to the above description about the calender device and the eliminator.

The lamination roll functions to attach the dry electrode film formed by the calender to at least one surface of the current collector and to carry out pressing.

The porosity of the dry electrode film may be determined by the calender and the lamination roll.

The system may include a jet-milling device, instead of the kneader and the pulverizer. The particular structures of the blender, the kneader, the calender and the lamination roll are known to those skilled in the art, and detailed description thereof is omitted herein.

MODE FOR DISCLOSURE

Hereinafter, the present disclosure will be explained in detail with reference to Examples, Comparative Examples and Test Examples so that the present disclosure will fully convey the scope of the present disclosure to those skilled in the art.

Example 1

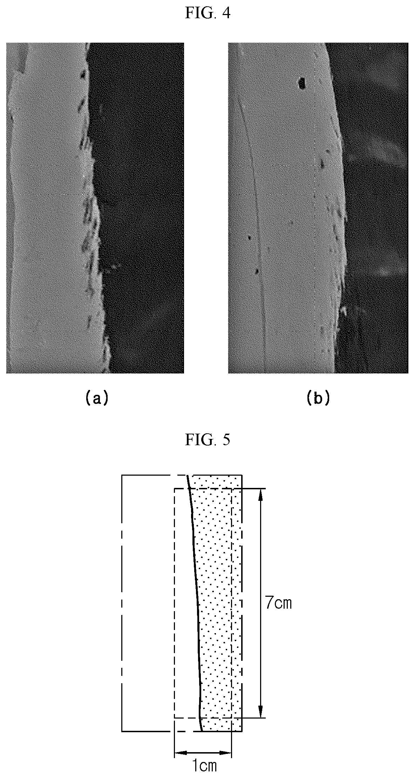

First, 94 g of Li(Ni$_x$Co$_y$Mn$_z$Al$_a$)O$_2$ (x = 0.880±0.010, y = 0.050±0.010, z = 0.070±0.010, a = 0.005±0.002) as a positive electrode active material, 3 g of carbon black as a conductive material and 3 g of polytetrafluoroethylene (PTFE) as a binder were introduced to a blender and mixed at 15,000 rpm for 1 minute to prepare a mixture. The temperature of a kneader was stabilized at 150°C, the mixture was introduced to the kneader, and the kneader was operated at a speed of 50 rpm for 5 minutes to obtain mixture lumps. The mixture lumps were introduced to a blender and pulverized at 10,000 rpm for 1 minute to obtain an electrode powder. PTFE was prepared as a polymer resin powder. Then, the electrode powder and the polymer resin powder were introduced to a lab calender (roll diameter: 88 mm, roll temperature: 100°C, roll speed ratio: 20/24 rpm) to obtain an electrode film member. FIG. 4 is a photographic image of the electrode film member obtained from Example 1. The black colored portion is an electrode mixture portion and the light colored portion is a protective portion. It can be seen from FIG. 4 that the edge boundary of the electrode mixture portion was formed uniformly and regularly.

Example 2

The electrode film member obtained from Example 1 was subjected to the second lab calendering process under the same condition as the first lab calendering process.

Example 3

First, 94 g of the positive electrode active material (the same as Example 1), 3 g of carbon black as a conductive material and 3 g of polytetrafluoroethylene (PTFE) as a binder were introduced to a blender and mixed at 15,000 rpm for 1 minute to prepare a mixture. The temperature of a kneader was stabilized at 150°C, the mixture was introduced to the kneader, and the kneader was operated at a speed of 50 rpm for 5 minutes to obtain mixture lumps. The mixture lumps were introduced to a blender and pulverized at 10,000 rpm for 1 minute to obtain an electrode powder. A mixture containing PTFE and SBR mixed at a weight ratio of 5:2 was prepared as a polymer resin powder. Then, the electrode powder and the polymer resin powder were introduced to a lab calender (roll diameter: 88 mm, roll temperature: 100°C, roll speed ratio: 20/24 rpm) to obtain an electrode film member.

Example 4

The electrode film member obtained from Example 3 was subjected to the second lab calendering process under the same condition as the first lab calendering process.

Example 5

First, 94 g of the positive electrode active material (the same as Example 1), 3 g of carbon black as a conductive material and 3 g of polytetrafluoroethylene (PTFE) as a binder were introduced to a blender and mixed at 15,000 rpm for 1 minute to prepare a mixture. The temperature of a kneader was stabilized at 150°C, the mixture was introduced to the kneader, and the kneader was operated at a speed of 50 rpm for 5 minutes to obtain mixture lumps. The mixture lumps were introduced to a blender and pulverized at 10,000 rpm for 1 minute to obtain an electrode powder. A mixture containing PTFE and fluoro-rubber (Viton) mixed at a weight ratio of 5:2 was prepared as a polymer resin powder. Then, the electrode powder and the polymer resin powder were introduced to a lab calender (roll diameter: 88 mm, roll temperature: 100°C, roll speed ratio: 20/24 rpm) to obtain an electrode film member.

Example 6

The electrode film member obtained from Example 5 was subjected to the second lab calendering process under the same condition as the first lab calendering process.

Comparative Example 1

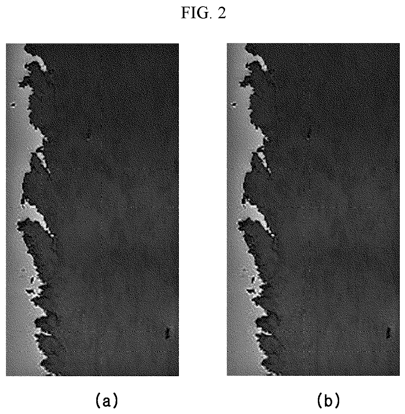

First, 94 g of the positive electrode active material (the same as Example 1), 3 g of carbon black as a conductive material and 3 g of polytetrafluoroethylene (PTFE) as a binder were introduced to a blender and mixed at 15,000 rpm for 1 minute to prepare a mixture. The temperature of a kneader was stabilized at 150°C, the mixture was introduced to the kneader, and the kneader was operated at a speed of 50 rpm for 5 minutes to obtain mixture lumps. The mixture lumps were introduced to a blender and pulverized at 10,000 rpm for 1 minute to obtain an electrode powder. Then, the electrode powder and the polymer resin powder were introduced to a lab calender (roll diameter: 88 mm, roll temperature: 100°C, roll speed ratio: 20/24 rpm) to obtain a dry electrode film. FIG. 2 is a photographic image of the dry electrode film member obtained from Comparative Example 1. It can be seen from FIG. 2 that the edge boundary of the dry electrode film was not regular but a significantly non-uniform sawtooth-like shape was formed.

Comparative Example 2

The dry electrode film obtained from Comparative Example 1 was subjected to the second lab calendering process under the same condition as the first lab calendering process.

Evaluation of Mechanical Properties

Each of the electrode film members (including the protective portion) obtained from Examples 1-6 and the dry electrode films (having no protective portion) obtained from Comparative Examples 1 and 2 was cut into a size of 1 cm x 7 cm to prepare a sample. Each sample was tested by using a UTM instrument available from ZwickRoell Co. according to the method of ASTM 638. In the test, the test instrument was set to a pre-load of 0.01 kg/cm and a speed of 50 mm/min. In addition, the elongation at break of each sample was calculated according to the formula of (length at break/initial sample length) x 100. The test results are shown in the following Table 1.

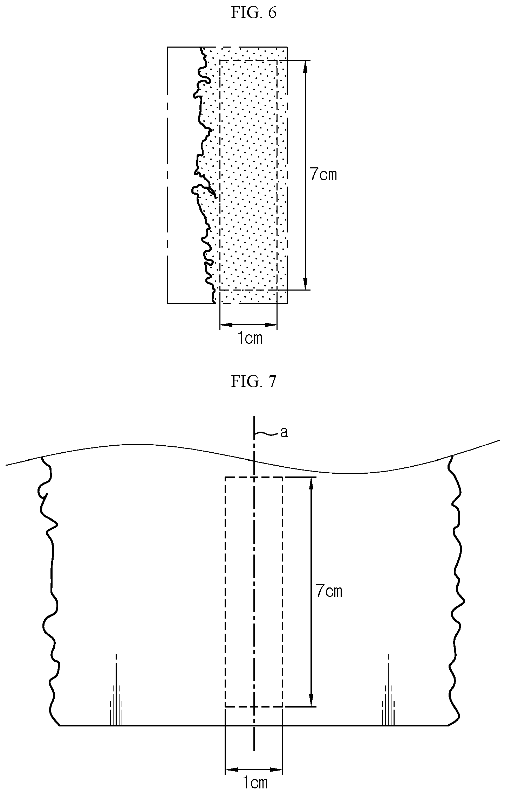

In the case of Examples, a portion having a width of 1 cm from one end of the electrode film member to the inside in the cross-machine direction was cut with a length of 7 cm to prepare a sample having a protective portion within the width (1 cm) thereof (see FIG. 5). In the case of Comparative Examples, a portion having a width of 1 cm from the end portion except the non-uniform sawtooth portion to the inside was cut with a length of 7 cm to prepare a sample in which the non-uniform sawtooth portion was retained (see FIG. 6). In other words, the width of the sample became the width of the sawtooth portion ± 1 cm. Meanwhile, an electrode film was obtained in the same manner as Comparative Example 1, and the left and right width of 1 cm of the electrode film was cut with a length of 7 cm around the center line (a) of the electrode film to prepare Reference Example 1. In addition, an electrode film was obtained in the same manner as Comparative Example 2, and the left and right width of 1 cm of the electrode film was cut with a length of 7 cm around the center line (a) of the electrode film to prepare Reference Example 2. Reference Examples were prepared to represent the mechanical strength of an electrode film manufactured with no damage upon the end portion. The measurements of Examples and Comparative Examples were compared with those of Reference Examples as shown in the below.

[Table 1]

|  | Modulus (Mpa) | Tensile Strength | Elongation at break |
|---|---|---|---|
|  |  | (Mpa) | (%) |
| Example 1 | 71 | 1.83 | 9.9 |
| Example 2 | 343 | 6.66 | 7.8 |
| Example 3 | 25 | 0.83 | 7.5 |
| Example 4 | 39 | 1.13 | 6.4 |
| Example 5 | 95 | 1.94 | 4.4 |
| Example 6 | 409 | 8.37 | 4.4 |
| Comparative Example 1 | 18 | 0.42 | 4.9 |
| Comparative Example 2 | 49 | 0.89 | 4.6 |
| Reference Example 1 | 53 | 1.11 | 5.9 |
| Reference Example 2 | 72 | 1.17 | 4.7 |

As can be seen from Table 1, the end portions of the electrode film members obtained from the Examples showed better results in terms of mechanical properties, as compared to the end portions of the electrode films obtained from the Comparative Examples. It can be seen that the Comparative Examples showed significantly lower mechanical properties as compared to the Examples. Meanwhile, in the case of the Examples, the end portions showed a mechanical strength similar to or higher than the mechanical strength according to the Reference Examples. Therefore, it can be seen that the electrode film member provided with the protective portion can retain its shape stably during the electrode manufacturing process and can provide improved processability.

[Description of Drawing Numerals]

31: Ingredient-supplying unit
11: Electrode mixture powder
32: Calender roller
130: Dry electrode film
12: Powdery polymer resin
33: guide dam
34: Partition member
151: Protective portion
152: Electrode mixture portion
150: Electrode film member

**Claims**

1. A method for manufacturing a dry electrode film, comprising:

   (S10) preparing an electrode mixture powder for manufacturing the dry electrode film and a powdery polymer resin;
   (S20) introducing the polymer resin to at least one end of the electrode mixture powder in a cross-machine direction, and compressing the electrode mixture powder and the powdery polymer resin to be processed into a sheet-like electrode film member having a predetermined thickness; and
   (S30) removing an edge part having a predetermined width from an end of the electrode film member in the cross-machine direction,
   wherein the electrode film member has an electrode mixture portion having a predetermined width, and a protective portion connected to the end to which the powdery polymer resin is introduced in the cross-machine direction of the electrode mixture portion and having a predetermined width; and the protective portion is included in the edge part of the electrode film member and removed when carrying out the removing (S30);
   wherein introducing (S20) is carried out by a calendering process, and the powdery polymer resin is introduced to both ends of an input stream of the electrode mixture powder during the calendering process.

2. The method for manufacturing a dry electrode film according to claim 1, wherein the electrode mixture powder comprises an electrode active material, a conductive material and a binder resin, and the binder resin is treated by a microfibrilization process.

3. The method for manufacturing a dry electrode film according to claim 1, wherein the calendering process is carried out by using a pair of calendering rollers, and an input stream of the powdery polymer resin and the input stream of the electrode mixture powder are divided by a guide dam disposed in front of the calendering rollers.

4. The method for manufacturing a dry electrode film according to claim 1, wherein the powdery polymer resin is treated by a microfibrilization process.

5. The method for manufacturing a dry electrode film according to claim 1, wherein the powdery polymer resin comprises an elastomeric polymer, and the elastomeric polymer is used in an amount of 40 wt% or less based on 100 wt% of the powdery polymer resin.

6. The method for manufacturing a dry electrode film according to claim 5, wherein the elastomeric polymer comprises at least one selected from styrene-butadiene rubber (SBR), butadiene rubber (BR), nitrile-butadiene rubber, fluoro-rubber, such as Viton rubber, chloroprene rubber (CR), ethylene-propylene rubber (EPM) and silicone rubber.

7. The method for manufacturing a dry electrode film according to claim 1, wherein the powdery polymer resin comprises polytetrafluoroethylene PTFE.

8. The method for manufacturing a dry electrode film according to claim 1, wherein the dry electrode powder is obtained by:

    (a) preparing a powdery mixture including an electrode active material, a conductive material and a binder resin;
    (b) kneading the powdery mixture at 70-200°C to prepare mixture lumps; and
    (c) pulverizing the mixture lumps to obtain an electrode powder.

9. The method for manufacturing a dry electrode film according to claim 1, wherein the polymer resin is introduced to both end portions of the electrode mixture powder in the cross-machine direction, during the introducing (S20),

    the edge part having a predetermined width is removed from the end portions of the electrode member in the cross-machine direction, during the removing (S30), and
    the protective portion is connected to each of the end portions of the electrode mixture portion in the cross-machine direction.


**Patentansprüche**

1. Verfahren zur Herstellung eines trockenen Elektrodenfilms, umfassend:

    (S10) Herstellen eines Elektrodenmischungspulvers zur Herstellung des trockenen Elektrodenfilms und eines pulverförmigen Polymerharzes;
    (S20) Einführen des Polymerharzes in mindestens ein Ende des Elektrodenmischungspulvers in einer Maschinenquerrichtung und Komprimieren des Elektrodenmischungspulvers und des zu verarbeitenden pulverförmigen Polymerharzes zu einem blattartigen Elektrodenfilmelement mit einer vorbestimmten Dicke; und
    (S30) Entfernen eines Randteils mit einer vorbestimmten Breite von einem Ende des Elektrodenfilmelements in der Maschinenquerrichtung,
    wobei das Elektrodenfilmelement einen Elektrodenmischungsabschnitt mit einer vorbestimmten Breite und einen Schutzabschnitt aufweist, der mit dem Ende verbunden ist, in das das pulverförmige Polymerharz in der Maschinenquerrichtung des Elektrodenmischungsabschnitts eingeführt wird, und eine vorbestimmte Breite aufweist; und der Schutzabschnitt in dem Randteil des Elektrodenfilmelements enthalten ist und entfernt wird, wenn das Entfernen (S30) ausgeführt wird;
    wobei das Einführen (S20) durch einen Kalandrierprozess ausgeführt wird und das pulverförmige Polymerharz während des Kalandrierprozesses in beide Enden eines Eingangsstroms des Elektrodenmischungspulvers eingeführt wird.

2. Verfahren zur Herstellung eines trockenen Elektrodenfilms nach Anspruch 1, wobei das Elektrodenmischungspulver ein aktives Elektrodenmaterial, ein leitfähiges Material und ein Bindemittelharz umfasst und das Bindemittelharz durch einen Mikrofibrillierungsprozess behandelt wird.

3. Verfahren zur Herstellung eines trockenen Elektrodenfilms nach Anspruch 1, wobei der Kalandrierprozess unter Verwendung eines Paars Kalandrierwalzen ausgeführt wird und ein Eingangsstrom des pulverförmigen Polymerharzes und der Eingangsstrom des Elektrodenmischungspulvers durch einen Führungsdamm geteilt werden, der vor den Kalandrierwalzen angeordnet ist.

4. Verfahren zur Herstellung eines trockenen Elektrodenfilms nach Anspruch 1, wobei das pulverförmige Polymerharz durch einen Mikrofibrillierungsprozess behandelt wird.

5. Verfahren zur Herstellung eines trockenen Elektrodenfilms nach Anspruch 1, wobei das pulverförmige Polymerharz ein elastomeres Polymer umfasst und das elastomere Polymer in einer Menge von 40 Gew.-% oder weniger, bezogen auf 100 Gew.-% des pulverförmigen Polymerharzes, verwendet wird.

6. Verfahren zur Herstellung eines trockenen Elektrodenfilms nach Anspruch 5, wobei das elastomere Polymer mindestens eines umfasst, das aus Styrol-Butadien-Kautschuk (SBR), Butadien-Kautschuk (BR), Nitril-Butadien-Kautschuk, Fluorkautschuk, wie Viton-Kautschuk, Chloropren-Kautschuk (CR), Ethylen-Propylen-Kautschuk (EPM) und Silikonkautschuk ausgewählt ist.

7. Verfahren zur Herstellung eines trockenen Elektrodenfilms nach Anspruch 1, wobei das pulverförmige Polymerharz Polytetrafluorethylen-PTFE umfasst.

8. Verfahren zur Herstellung eines trockenen Elektrodenfilms nach Anspruch 1, wobei das trockene Elektrodenpulver erhalten wird durch:

(a) Herstellen einer pulverförmigen Mischung, die ein aktives Elektrodenmaterial, ein leitfähiges Material und ein Bindemittelharz enthält;
(b) Kneten der pulverförmigen Mischung bei 70-200°C, um Mischungsklumpen herzustellen; und
(c) Pulverisieren der Mischungsklumpen, um ein Elektrodenpulver zu erhalten.

9. Verfahren zur Herstellung eines trockenen Elektrodenfilms nach Anspruch 1, wobei das Polymerharz während des Einführens (S20) in beide Endabschnitte des Elektrodenmischungspulvers in der Maschinenquerrichtung eingeführt wird,

der Randteil mit einer vorbestimmten Breite während des Entfernens (S30) von den Endabschnitten des Elektrodenelements in der Maschinenquerrichtung entfernt wird, und
der Schutzabschnitt mit jedem der Endabschnitte des Elektrodenmischungsabschnitts in der Maschinenquerrichtung verbunden ist.

## Revendications

1. Procédé de fabrication d'un film d'électrode sèche, consistant à :

(S10) préparer une poudre de mélange d'électrode pour fabriquer le film d'électrode sèche et une résine polymère en poudre ;
(S20) introduire la résine polymère à au moins une extrémité de la poudre de mélange d'électrode dans un sens transversal au sens machine, et comprimer la poudre de mélange d'électrode et la résine polymère en poudre à traiter en un élément de film d'électrode en forme de feuille ayant une épaisseur prédéterminée ; et
(S30) retirer une partie de bord ayant une largeur prédéterminée depuis une extrémité de l'élément de film d'électrode dans le sens transversal au sens machine,
dans lequel l'élément de film d'électrode a une partie de mélange d'électrode ayant une largeur prédéterminée, et une partie protectrice reliée à l'extrémité à laquelle la résine polymère en poudre est introduite dans le sens transversal au sens machine de la partie de mélange d'électrode et ayant une largeur prédéterminée ; et la partie protectrice est inclue dans la partie de bord de l'élément de film d'électrode et retirée lors de la réalisation du retrait (S30) ;
dans lequel l'introduction (S20) est réalisée par un processus de calandrage, et la résine polymère en poudre est introduite aux deux extrémités d'un flux d'entrée de la poudre de mélange d'électrode pendant le processus de calandrage.

2. Procédé de fabrication d'une électrode sèche selon la revendication 1, dans lequel la poudre de mélange d'électrode comprend un matériau actif d'électrode, un matériau conducteur et une résine liante, et la résine liante est traitée par un processus de microfibrillation.

3. Procédé de fabrication d'une électrode sèche selon la revendication 1, dans lequel le processus de calandrage est réalisé en utilisant une paire de rouleaux de calandrage, et un flux d'entrée de la résine polymère en poudre et le flux d'entrée de la poudre de mélange d'électrode sont divisés par un barrage de guidage disposé devant les rouleaux de calandrage.

4. Procédé de fabrication d'une électrode sèche selon la revendication 1, dans lequel la résine polymère en poudre est traitée par un processus de microfibrillation.

5. Procédé de fabrication d'une électrode sèche selon la revendication 1, dans lequel la résine polymère en poudre comprend un polymère élastomère, et le polymère élastomère est utilisé dans une quantité égale ou inférieure à 40 % en poids sur la base de 100 % en poids de la résine polymère en poudre.

6. Procédé de fabrication d'une électrode sèche selon la revendication 5, dans lequel le polymère élastomère comprend un ou plusieurs caoutchoucs parmi un caoutchouc de styrène-butadiène (SBR), caoutchouc de butadiène (BR), caoutchouc de nitrile-butadiène, caoutchouc fluoré, par exemple un caoutchouc Viton, caoutchouc de chloroprène (CR), caoutchouc d'éthylène-propylène (EPM) et caoutchouc de silicone.

7. Procédé de fabrication d'une électrode sèche selon la revendication 1, dans lequel la résine polymère en poudre comprend un polytétrafluoroéthylène PTFE.

8. Procédé de fabrication d'une électrode sèche selon la revendication 1, dans lequel la poudre d'électrode sèche est obtenue par :

> (a) la préparation d'un mélange en poudre incluant un matériau actif d'électrode, un matériau conducteur et une résine liante ;
> (b) le malaxage du mélange en poudre à 70-200°C pour préparer des grumeaux de mélange ; et
> (c) la pulvérisation des grumeaux de mélange pour obtenir une poudre d'électrode.

9. Procédé de fabrication d'une électrode sèche selon la revendication 1, dans lequel la résine polymère est introduite aux deux parties d'extrémité de la poudre de mélange d'électrode dans le sens transversal au sens machine, pendant l' introduction (S20),

> les parties de bord ayant une largeur prédéterminée est retirée des parties d'extrémité de l'élément d'électrode dans le sens transversal au sens machine, pendant le retrait (S30), et
> la partie protectrice est reliée à chacune des parties d'extrémité de la partie de mélange d'électrode dans le sens transversal au sens machine.

FIG. 1

FIG. 2

(a)                    (b)

FIG. 3a

FIG. 3b

FIG. 4

(a)                              (b)

FIG. 5

7cm

1cm

FIG. 6

7cm

1cm

FIG. 7

a

7cm

1cm

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210104170
- US 7572551 B1
- CN 102629681 A
- US 2007143989 A1
- DE 1804743 A1
- EP 4207338 A1